Europäisches Patentamt

European Patent Office

Office européen des brevets

(11) Veröffentlichungsnummer: **0 011 290**
**A1**

# (12) EUROPÄISCHE PATENTANMELDUNG

(21) Anmeldenummer: 79104500.8

(22) Anmeldetag: 14.11.79

(51) Int. Cl.³: **A 47 J 31/24**
**A 47 J 31/54**

(30) Priorität: 17.11.78 IT 1287078

(43) Veröffentlichungstag der Anmeldung:
28.05.80 Patentblatt 80/11

(84) Benannte Vertragsstaaten:
AT BE CH DE FR GB IT LU NL SE

(71) Anmelder: Bonanno, Francesco
Via Spalato 33/7
I-16141 Genova(IT)

(72) Erfinder: Bonanno, Francesco
Via Spalato 33/7
I-16141 Genova(IT)

(74) Vertreter: Kirschner, Klaus D. et al,
Patentanwälte Klaus D. Kirschner & Wolfgang Grosse
Herzog-Wilhelm-Strasse 17
D-8000 München 2(DE)

(54) **Espressokaffeemaschine.**

(57) Der mit mindestens einer Dampfabzapftülle (13) verbundene Heisswasserkessel (9) und der darin angeordnete, zwischen den Kaffeefiltervorrichtungen (4) und der Speisepumpe (34) für das Aufgusswasser zur Kaffeezubereitung eingeschaltete Durchlauferhitzer liegen unmittelbar über den Kaffeefilter = vorrichtungen (4) und diese sind mit einem im unteren Be = reich des Heisswasserkessels (9) angeordneten Abschnitt des Durchlauferhitzer verbunden. Die Speisepumpe (34) und ein allfälliger Enthärter (33) für das Aufgusswasser können im Gehäuse (1) der Espressokaffeemaschine untergebracht werden.

Fig.1

EP 0 011 290 A1

- 1 -

Espressokaffeemaschine

Die Erfindung betrifft eine Espressokaffeemaschine mit einem geschlossenen Heisswasserkessel, mindestens einer mit dem oberen dampfgefüllten Teil dieses Heisswasserkessels wahlweise verbindbaren Dampfabzapftülle, einem im wassergefüllten Teil des Heisswasserkessels angeordneten, mit einer Speisepumpe verbundenen Durchlauferhitzer für das Aufgusswasser zur Kaffeezubereitung und mindestens einer wahlweise mit dem Durchlauferhitzer verbindbaren Kaffeefiltervorrichtung.

Bei diesen Espressokaffeemaschinen weist das Wasser im geschlossenen Heisswasserkessel eine Durchschnittstemperatur von mehr als 100°C auf. Es ist aber bekannt, dass für die Zubereitung eines guten Espressokaffees das Aufgusswasser beim Durchsickern durch das Kaffeepulver eine Temperatur von ungefähr 90°C aufweisen muss. Bei den bekannten Espressokaffeemaschinen der eingangs beschriebenen Art ist der Heisswasserkessel hinter den Kaffeefiltervorrichtungen etwa in derselben Höhe oder sogar tiefer angeordnet und die Kaffeefiltervorrichtungen sind über längere Zulaufkanäle für das Aufgusswasser mit dem Durchlauferhitzer etwa im mittleren Höhenbereich dieses Erhitzers verbunden. Weger der verh....
.nismässig grossen Länge der Zulaufkanäle bis zu den Kaffee
filtervorrichtungen kann sich das mit einer Temperatur von
über 100°C vom Durchlauferhitzer abgeleitete Aufgusswasser
auf etwa 90°C abkühlen, bis es die Kaffeefiltervorrichtungen
erreicht. Der Nachteil dieser bekannten Ausbildung besteht
jedoch darin, dass die verhältnismässig lange Verbindung
zwischen dem Durchlauferhitzer und den Kaffeefiltervorrichtungen eine komplizierte und aufwendige Konstruktion bedingt,
und dass die Anordnung des Heisswasserkessels hinter den
Kaffeefiltervorrichtungen etwa in der selben Höhe dieser
Vorrichtungen die entsprechende Breitenabmessung der
Espressokaffeemaschine erhöht. Infolgedessen müssen die dem
Durchlauferhitzer zugeordnete Aufgusswasserpumpe und der
meist vorgesehene Aufgusswasserenthärter ausserhalb des
Kaffeemaschinengehäuses, z.B. unterhalb der Theke angeordnet werden. Dadurch wird der Einbau der Espressokaffeemaschine zusätzlich erschwert.

Aufgabe der Erfindung ist es, die Nachteile der bekannten
Ausführungen zu beheben und eine Espressokaffeemaschine der
eingangs beschriebenen Art zu schaffen, bei der die günstige
Kaffeezubereitungstemperatur des Aufgusswassers von etwa
90°C mit einer einfacheren und billigeren baulichen Ausführung der Maschine in Verbindung mit einer Herabsetzung der
Maschinenbreite bzw. einer Erhöhung des verfügbaren Nutzraums im Maschinengehäuse erzielt werden kann.

Diese Aufgabe wird erfindungsgemäss dadurch gelöst, dass
der Heisswasserkessel unmittelbar über der Kaffeefilter=

0011290

vorrichtung angeordnet und diese mit einem im unteren Bereich des Heisswasserkessels liegenden Abschnitt des Durchlauferhitzers verbunden ist.

Die Erfindung stützt sich auf die Erkenntnis, dass die
Wassertemperatur im Heisswasserkessel mit zunehmender Tiefe
etwas abnimmt, d.h. dass im Oberflächenbereich der Wasserfüllung dieses Kessels eine Temperatur von mehr als 100°C,
dagegen im unteren Bereich bzw. im Bodenbereich des Heisswasserkessels eine Temperatur von ungefähr 100°C und manchmal
sogar von weniger als 100°C herrscht. Durch die erfindungsgemässe Verbindung der Kaffeefiltervorrichtung mit einem im
unteren Bereich des Heisswasserkessels liegenden Teil des
Durchlauferhitzers wird also das Aufgusswasser mit einer
Temperatur von höchstens 100°C, im allgemeinen mit einer
Temperatur von weniger als 100°C vom Durchlauferhitzer abgezogen. Dieses Aufgusswasser kühlt sich bis zur Kaffeefiltervorrichtung auf etwa 90°C ab, auch wenn der Zulaufkanal zwischen dem Durchlauferhitzer und der Kaffeefiltervorrichtung
bedeutend kürzer als bei den bekannten Espressokaffeemaschinen ist. Infolgedessen kann der Heisswasserkessel erfindungsgemäss unmittelbar über der Kaffeefiltervorrichtung angeordnet werden. Dadurch wird eine bedeutend schmalere Espressokaffeemaschine erzielt, die einen entsprechend kleinen Oberflächenanteil der Theke in Anspruch nimmt, wenn die Speisepumpe für das Aufgusswasser und der Aufgusswasserenthärter
in an sich bekannter Weise unterhalb der Theke angeordnet
sind. Werden dagegen die selben Gehäuseabmessungen der
bisher bekannten Espressokaffeemaschinen beibehalten, kann
der im Maschinengehäuse verfügbare Nutzraum dermassen er= weitert werden, dass nach einem weiteren erfindungsgemäss=
Merkmal die Speisepumpe für das Aufgusswasser und ein allfälliger Aufgusswasserenthärter im Gehäuse der Espressokaffeemaschine untergebracht werden können. Die Anordnung
des Heisswasserkessels unmittelbar über der Kaffeefiltervorrichtung ermöglicht auch eine bedeutend einfachere Ausbildung der Verbindung zwischen dem Durchlauferhitzer und
der Kaffeefiltervorrichtung. Insbesondere ist es in vorteilhafter Weiterentwicklung des Erfindungsgedankens möglich,
die Kaffeefiltervorrichtung mit einer Anschlussbohrung
dichtend auf einen unterseitig vom Heisswasserkessel vorspringenden, mit dem Durchlauferhitzer verbundenen Wasserabzapfstutzen zu stecken.

Der Durchlauferhitzer kann in beliebiger Weise ausgebildet
sein. Eine Temperatur des vom Durchlauferhitzer austretenden Aufgusswassers von weniger als 100°C kann jedoch in
einer bevorzugten Ausführungsform der Erfindung dadurch mit
besonders grosser Sicherheit gewährleistet werden, dass der
Durchlauferhitzer aus einem waagerechten Wendelrohr besteht,
dessen Einlaufende mit der Speisepumpe für das Aufgusswasser
und dessen Auslaufende mit einem im unteren Bereich des vom
Wendelrohr umgebenen Raums oder im unteren Bereich des Heisswasserkessels in Richtung auf das Einlaufende zurückgeführten, an die Kaffeefiltervorrichtung angeschlossenen Rohrabschnitt verbunden ist. Im Falle von mehreren, an den Durchlauferhitzer angeschlossenen Kaffeefiltervorrichtungen
können - in einer abgewandelten Ausführungsform der Erfindung - auch mehrere, je einer Kaffeefiltervorrichtung zugeordnete, in Parallelschaltung über einen gemeinsamen Einlauf mit der Speisepumpe für das Aufgusswasser verbundene Wendel= rohre als Durchlauferhitzer im Heisswasserkessel vorgesehen sein. In einer anderen, einfacheren Ausführungsform der Er= findung kann der Durchlauferhitzer aus einem beiderends ge= schlossenen, waagerechten Zylinder bestehen, der im unteren Bereich des Heisswasserkessels angeordnet und vorzugsweise über eine durch den darüberliegenden Bereich des Heisswasser= kessels durchgeführte Vorwärmeleitung mit der Speisepumpe für das Aufgusswasser verbunden ist.

Die Heizung des Heisswasserkessels kann ebenfalls in belie= biger Weise erfolgen. Vorzugsweise wird jedoch mindestens ein im Heizwasserkessel liegender elektrischer Heizwider= stand benutzt, der im Inneren des vom Wendelrohr des Durch= lauferhitzers umgebenen Raums oder über dem waagerechten Zylinder des Durchlauferhitzers angeordnet sein kann.

Weitere Merkmale der Erfindung ergeben sich aus den Unter= ansprüchen. Die damit erzielten Vorteile sowie weitere Ein= zelheiten der Erfindung gehen aus nachstehender Beschreibung einiger, in der Zeichnung dargestellter Ausführungsbeispiele hervor.

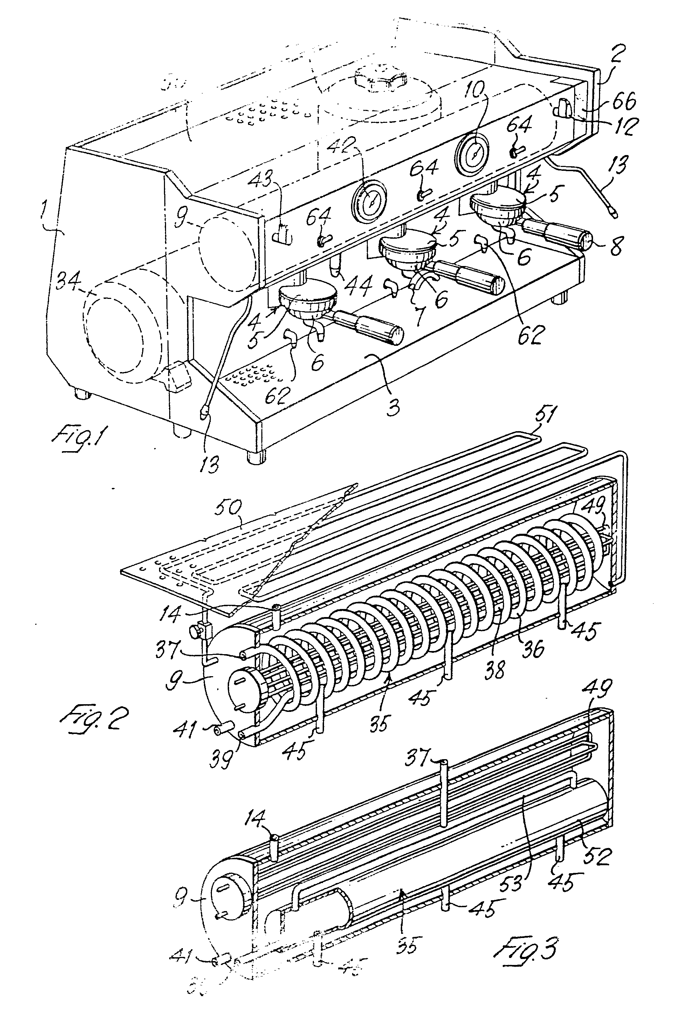

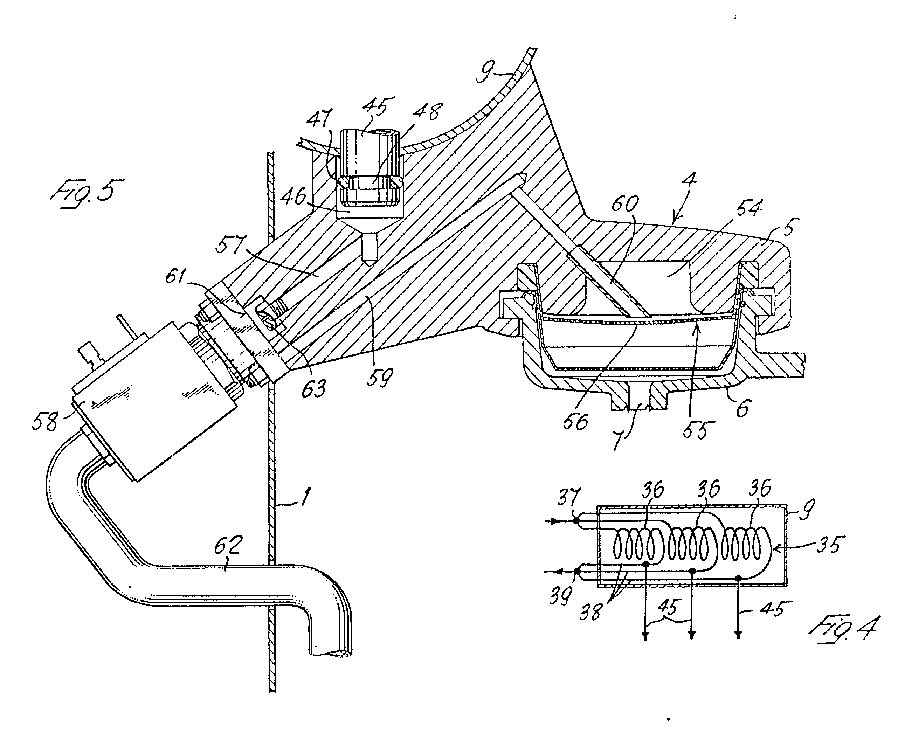

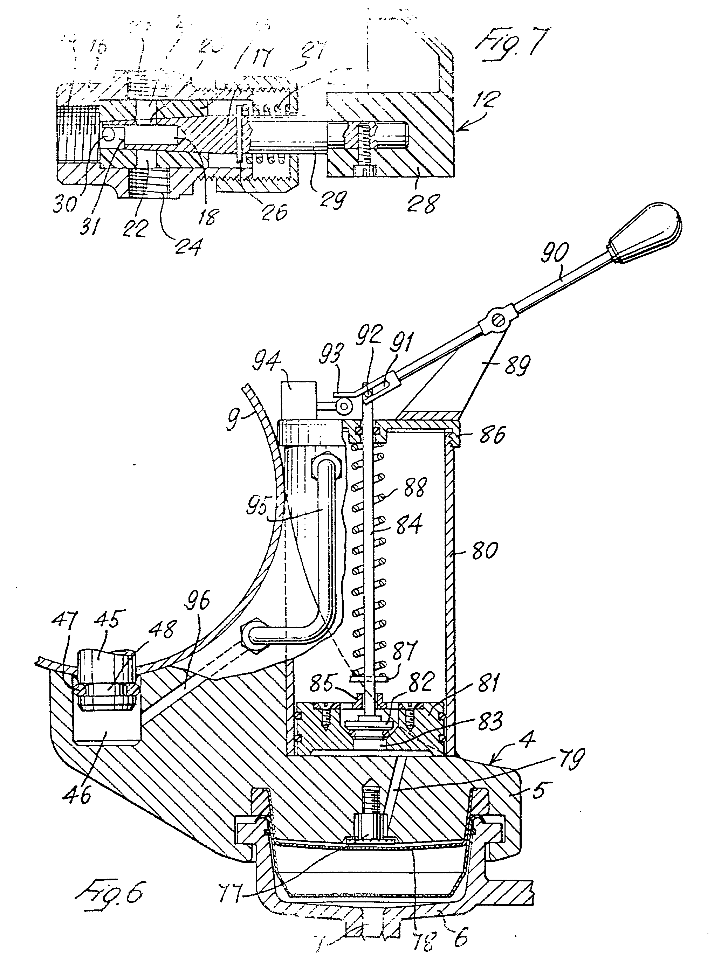

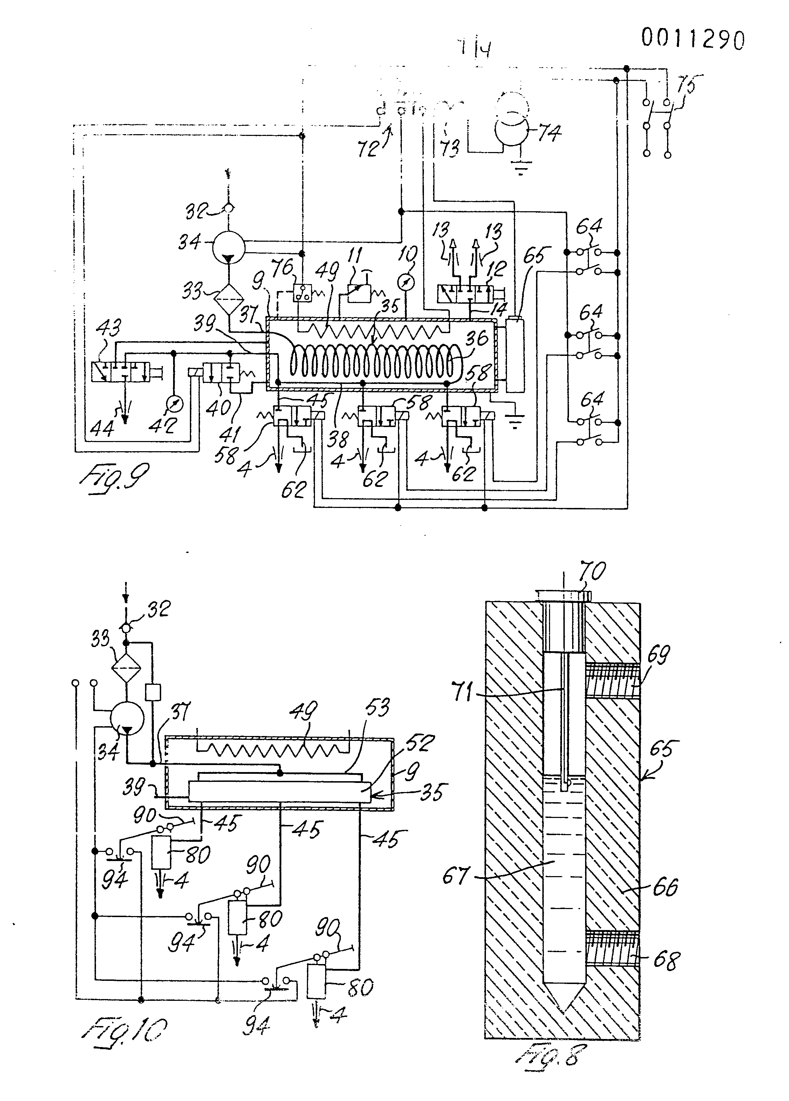

Fig. 1 zeigt in schaubildlicher Darstellung eine erfin= dungsgemässe Espressokaffeemaschine; Fig. 2 und 3 zei= gen in schaubildlicher Darstellung zwei Ausführungsbei= spiele des Durchlauferhitzers für das Aufgusswasser; Fig. 4 zeigt schematisch eine Ausführungsvariante des Durchlauferhitzers nach Fig. 2; Fig. 5 ist ein verti= kaler Schnitt durch eine erste Ausführungsform der Kaffeefiltervorrichtung; Fig. 6 ist ein vertikaler Schnitt durch eine zweite Ausführungsform der Kaffee- filtervorrichtung; Fig. 7 zeigt im Längsschnitt einen Dreiwegehahn der Espressokaffeemaschine; Fig. 8 ist ein vertikaler Schnitt durch den Wasserstandswächter des Heisswasserkessels; Fig. 9 zeigt das elektrische und hydraulische Schaltschema der Espressokaffeemaschi- ne nach Fig. 1 mit dem Durchlauferhitzer nach Fig. 2 und der Kaffeefiltervorrichtung nach Fig. 5; Fig. 10 zeigt das vereinfachte elektrische und hydraulische Schaltschema einer Espressokaffeemaschine mit dem Durchlauferhitzer nach Fig. 3 und der Kaffeefiltervor- richtung nach Fig. 6.

Das Gehäuse 1 der in Fig. 1 dargestellten Espressokaffeema- schine weist auf seiner der Bedienungsperson zugekehrten Seite einen oberen, konsolenartig vorspringenden Gehäuseteil 2 mit darunterliegendem Auflagetisch 3 für die zu füllenden Kaffeetassen. Der kastenartige Auflagetisch 3 weist eine perforierte Oberfläche auf und ist mit einem nicht darge- stellten Auslauf versehen. Auf der Unterseite des oberen, konsolenartigen Gehäuseteils 2 sind die Kaffeefiltervor- richtungen 4 angeordnet. Jede Kaffeefiltervorrichtung 4 be- steht in an sich bekannter Weise aus einem oberen feststeh- enden Filterpfannenträger 5 und einer unteren, am Filter- pfannenträger 5 insbesondere mit Hilfe eines Bajonettver- schlusses lösbar befestigbaren Filterpfanne 6, die einen seitlich vorspringenden Bedienungsgriff 8 und mindestens eine nach unten gerichtete Ausflusstülle 7 für den zuberei- teten Kaffee aufweist.

Unmittelbar über den Kaffeefiltervorrichtungen 4 ist im oberen, konsolenartig vorspringenden Gehäuseteil 2 ein Heisswasserkessel 9 angeordnet, der aus einem waagerechten, zylindrischen, geschlossenen Behälter besteht und sich mit
seiner Achsrichtung in der Längsrichtung der Espressokaffeemaschine, d.h. in der Reihenrichtung der Kaffeefiltervorrichtungen 4 erstreckt. Der obere dampfgefüllte Teil des
Heisswasserkessels 9 ist mit einem Druckanzeiger 10 und
einem insbesondere in Fig. 9 dargestellten Sicherheitsventil
11 verbunden. Ausserdem kann der obere dampfgefüllte Teil
des Heisswasserkessels 9 wahlweise abwechselnd über ein Anschlussrohr 14 und ein handbetätigtes Dampfabzapfventil 12
mit einer der beiden Dampfabzapftüllen 13 verbunden werden.

In Fig. 7 ist ein vorteilhaftes Ausführungsbeispiel des als
Dreiwegehahn ausgebildeten Dampfabzapfventils 12 dargestellt.
Bei dieser Ausbildung besteht der Dreiwegehahn 12 aus einem
Gehäuse 15, in dessen Bohrung ein einstückiger Abdichtkörper
16 aus Kunststoff, insbesondere aus Polytetrafluoräthylen
angeordnet ist. Der Abdichtkörper 16 weist eine durchgehende
kegelförmige Axialbohrung auf, in der ein passend kegelförmiger Verschlusskörper 17 drehbar gelagert ist. Dieser Verschlusskörper 17 weist in seinem inneren schmaleren Ende
eine axial gerichtete Sackbohrung 18 auf, die mit einer
endseitigen, axial gerichteten Anschlussbohrung 19 des Gehäuses 15 in Verbindung steht. Ausserdem weist der Verschlusskörper 17 eine seitliche radiale Bohrung 20 auf, die
mit der Axialbohrung 18 in Verbindung steht und durch Verdrehung des Verschlusskörpers 17 abwechselnd mit einer von
zwei seitlichen radialen Bohrungen 21, 22 des Abdichtkörpers 16 zur Deckung gebracht werden kann. Die seitlichen Bohrungen 21, 22 des Abdichtkörpers 16 stehen mit entsprechenden radialen Anschlussbohrungen 23, 24 des Gehäuses 15 in Verbindung. Der kegelförmige Verschlusskörper 17 wird in Richtung seines schmaleren Endes durch eine Schraubenfeder 25 dichtend in die Bohrung des Abdichtkörpers 16 hineingedrückt. Die Feder 25 ist zwischen einer auf dem Verschlusskörper 17 vorgesehenen Federstütze 26 und einem kappenförmigen Schraubdeckel 27 für das Gehäuse 15 eingespannt. Der drehbar durch den Schraubdeckel 27 durchgeführte Schaft 29 des Verschlusskörpers 17 ist an seinem äusseren Ende mit einem Hebelgriff 28 versehen.

Die beiden Dampfabzapftüllen 13 werden mit je einer der seitlichen Anschlussbohrungen 23, 24 des in Fig. 7 dargestellten Dreiwegehahns 12 verbunden. Die axiale Anschlussbohrung 19 des Dreiwegehahns 12 steht dagegen mit dem Anschlussrohr 14 zu dem oberen Teil des Heisswasserkessels 9 in Verbindung. In einer mittleren Ruhestellung des Verschlusskörpers 17 sind beide, den Anschlussbohrungen 23, 24 entsprechende, seitliche Bohrungen 21, 22 des Abdichtkörpers 16 verschlossen. Durch Verdrehung des Verschlusskörpers 17 aus dieser Ruhestellung nach links oder nach rechts z.B. um je 90°, wird seine seitliche Bohrung 20 mit der einen oder anderen seitlichen Bohrung 21 bzw. 22 des Abdichtkörpers 16 zur Deckung gebracht. Dadurch wird die mit der entsprechenden seitlichen Anschlussbohrung 23 bzw. 24 des Dreiwegehahns 12 verbundene Dampfabzapftülle 13 über die axiale Sackbohrung 18 des Verschlusskörpers 15, die axiale Anschlussbohrung 19 des Dreiwegehahns 12 und das Anschlussrohr 14 mit dem dampfgefüllten Oberteil des Heisswasserkessels 9 verbunden. Die Verdrehung des Verschlusskörpers 17 wird durch
einen in die Bohrung des Abdichtkörpers 16 vorspringenden
Anschlagstift 30 begrenzt, der mit den Begrenzungsrändern
einer segmentförmigen, im Verschlusskörper 17 vorgesehenen
Ausnehmung 31 zusammenwirkt. Der aus der Dampfabzapftülle
13 austretende Dampf kann in an sich bekannter Weise zur
Erwärmung von Getränken od.dgl. benutzt werden.

Die in Fig. 7 dargestellte Ausbildung des Dreiwegehahns
weist - insbesondere durch die Anordnung des einstückigen
Abdichtkörpers 16 aus Kunststoff - den Vorteil einer grossen
konstruktiven Einfachheit in Verbindung mit einer einwandfreien Abdichtung in allen Drehstellungen des Verschlusskörpers 17 auf.

In dem wassergefüllten Teil des Heisswasserkessels 9 ist
ein einerseits mit den Kaffeefiltervorrichtungen 4 und andererseits über ein Rückschlagventil 32, einen Wasserenthärter
33 und eine Speisepumpe 34 mit der Wasserleitung verbundener
Durchlauferhitzer 35 für das Aufgusswasser zur Kaffeezubereitung angeordnet. In dem in Fig. 2 und 9 dargestellten
Ausführungsbeispiel besteht der Durchlauferhitzer 35 aus
einem waagerechten Wendelrohr 36, dessen Einlauf 37 über
den Aufgusswasserenthärter 33 mit der Aufgusswasserpumpe 34
und dessen Auslauf mit einem geraden, in Richtung auf den
Einlauf zurückgeführten Rohrabschnitt 38 verbunden ist. Der
gerade Rohrabschnitt 38 liegt im unteren Bereich des vom
Wendelrohr 36 umgebenen Raums und ist an seinem freien Ende
39 über ein elektromagnetisch betätigtes Wassernachfüllventil

40 einer selbsttätigen Wasserstandsregelvorrichtung und über ein Anschlussrohr 41 mit dem Heisswasserkessel 9 verbunden, wie insbesondere in Fig. 9 dargestellt ist. Das freie Ende 39 des geraden Rohrabschnitts 38 ist ausserdem - in Parallelschaltung zu dem automatischen Wassernachfüllventil 40 - mit einem Druckanzeiger 42 und einem Wasserabzapfventil 43 verbunden. Das Wasserabzapfventil 43 ist normalerweise geschlossen und kann eine Wasserabzapftülle 44 wahlweise abwechselnd mit dem Durchlauferhitzer 35, z.B. mit dem geraden Rohrabschnitt 38 des Wendelrohrs 36 oder mit dem wassergefüllten Teil des Heisswasserkessels 9 verbinden. Das Wasserabzapfventil 43 ist handbetätigt und kann die selbe Ausbildung des in Fig. 7 dargestellten Dreiwegehahns 12 aufweisen. Dabei wird die axiale Anschlussbohrung 19 des Dreiwegehahns mit der Wasserabzapftülle 44 verbunden. Die beiden seitlichen Anschlussbohrungen 23 und 24 des Dreiwegehahns werden dagegen mit dem Heisswasserkessel 9 bzw. mit dem Durchlauferhitzer 35 z.B. mit dem Auslaufende 39 des geraden Endabschnitts 38 des Wendelrohrs 36 verbunden.

Von dem geraden, auslaufseitigen Rohrabschnitt 38 des Wendelrohrs 36 sind nach unten die Verbindungsstutzen 45 für den Anschluss der Kaffeefiltervorrichtungen 4 abgezweigt. Auf diese von der Unterseite des Heisswasserkessels 9 vorspringende Verbindungsstutzen 45 sind die Filterpfannenträger 5 der einzelnen Kaffeefiltervorrichtungen 4 einfach mit einer entsprechenden Anschlussbohrung 46 gesteckt, wie insbesondere in Fig. 4 und 5 dargestellt ist. Die Abdichtung wird von einem O-Ring 47 bewirkt, der in einer Umfangsaut 48 des Verbindungsstutzens 45 liegt.

Das Wasser im Heisswasserkessel 9 wird von einem elektrischen Widerstand 49 erhitzt, der im Inneren des vom Wendelrohr 36 umgebenen Bereichs liegt und sich in der Längsrichtung des Heisswasserkessels erstreckt. Die obere Abschlussplatte 50 des Gehäuses 1 der Espressokaffeemaschine
nach Fig. 1 und 2 ist als Ablegetisch und Warmhalteplatte
für die bereitstehenden Kaffeetassen ausgebildet und wird
von einer darunterliegenden, mit dem Heisswasserkessel 9
verbundenen Rohrschlange 51 erwärmt.

Bei der Ausführungsvariante des Durchlauferhitzers 35 nach
Fig. 4, ist jeder Kaffeefiltervorrichtung 4 ein Wendelrohr
36 im Heisswasserkessel 9 zugeordnet. Diese Wendelrohre 36
sind in Parallelschaltung mit einem gemeinsamen Einlauf 37
verbunden und weisen auslaufseitig je einen geraden, zur
Einlaufseite zurückgeführten Rohrabschnitt 38 auf, von dem
der Verbindungsstutzen 45 zur zugeordneten Kaffeefiltervorrichtung 4 abgezweigt ist. Die geraden Rohrabschnitte 38
sind - abweichend von der Ausführungsform nach Fig. 2 -
ausserhalb der zugeordneten Wendelrohre 36 im unteren Bereich des Heisswasserkessels 9 angeordnet und über einen
gemeinsamen Auslauf 39 mit dem in Fig. 4 nicht dargestellten
Wassernachfüllventil 40 verbunden.

Bei dem Ausführungsbeispiel nach Fig. 3 besteht der Durchlauferhitzer 35 für das Aufgusswasser aus einem im unteren
Bereich des Heisswasserkessels 9 angeordneten, endseitig
geschlossenen Zylinder 52, von dessen Unterseite die Verbindungsstutzen 45 für den Anschluss der einzelnen Kaffeefiltervorrichtungen 4 abgehen. Über diesem Zylinder 52 ist der elektrische Heizwiderstand 49 für das Wasser im Heisswasserkessel 9 angeordnet. Der Zylinder 52 ist mit der Aufgusswasserpumpe 34 über den Einlauf 37 und eine im Heisswasserkessel 9 zwischen dem Zylinder 52 und dem Heizwiderstand 49
angeordnete Vorwärmeleitung 53 verbunden. Die Vorwärmeleitung 53 erstreckt sich in der Längsrichtung des Heisswasserkessels 9 und mündet in beiden Endbereichen des Zylinders
52 ein. Aus dem in Fig. 10 dargestellten Schaltbild des
Durchlauferhitzers nach Fig. 3 geht hervor, dass - im Gegensatz zu der Ausbildung nach Fig. 9 - der Wasserenthärter 33
auf der Saugseite der Aufgusswasserpumpe 34 angeordnet ist.
Infolgedessen fördert die Speisepumpe 34 bereits enthärtetes Wasser. Dadurch werden Kalkablagerungen in der Pumpe 34
vermieden.

Bei der vorstehend beschriebenen Anordnung und Ausbildung
des Heisswasserkessels 9 mit dem darin vorgesehenen Durchlauferhitzer 35 hat das vom Durchlauferhitzer 35 austretende Aufgusswasser eine Temperatur von etwa 100°C und sogar
von weniger als 100°C, obwohl der geschlossene Heisswasserkessel 9 als Dampfkessel zur Erzeugung von überhitztem bzw.
unter Druck stehendem, wahlweise abzapfbarem Wasserdampf
wirkt. Das Aufgusswasser erreicht also die Kaffeefiltervorrichtungen 4 mit der angestrebten günstigen Temperatur von
etwa 90°C trotz der kurzen und deshalb auch baulich einfachen Verbindung zwischen dem Durchlauferhitzer 35 bzw. dem
Heisswasserkessel 9 und den Kaffeefiltervorrichtungen 4.
Durch die Anordnung des Heisswasserkessels 9 mit dem Durchlauferhitzer 35 unmittelbar über den Kaffeefiltervorrichtungen 4 wird der hinter diesen Vorrichtungen liegende Raum frei. Infolgedessen können die Aufgusswasserpumpe 34 und der Wasserenthärter 33 im Gehäuse 1 der Espressokaffeema= schine untergebracht werden, wie insbesondere gestrichelt in Fig. 1 dargestellt ist, ohne dabei die Abmessungen des Gehäuses 1 über das bisher übliche Mass zu vergrössern. Werden dagegen die Aufgusswasserpumpe 34 und der Wasserent= härter 33 wie üblich von der Espressokaffeemaschine getrennt unter der Theke angeordnet, kann das Gehäuse 1 der Espresso= kaffeemaschine entsprechend schmal ausgebildet werden, wie strichpunktiert in Fig. 1 angedeutet ist.

Die Kaffeefiltervorrichtungen 4 können an sich beliebig ausgebildet sein. Bei dem in Fig. 5 und 9 dargestellten Aus= führungsbeispiel ist im Filterpfannenträger 5 über der Fil= terpfanne 6 eine Entspannungskammer 54 vorgesehen, die auf ihrer unteren, gegen die Filterpfanne 6 gekehrten Seite durch ein Sieb 55 abgeschlossen ist. Dieses Sieb 55 weist einen vollen, d.h. nicht perforierten Mittelbereich 56 auf. Die einerseits über den Verbindungsstutzen 45 mit dem Durch= lauferhitzer 35 verbundene Anschlussbohrung 46 des Filter= pfannenträgers 5 steht andererseits über einen ersten Zu= laufkanalabschnitt 57, ein elektromagnetisch gesteuertes Dreiwegeventil 58 und einen zweiten Zulaufkanalabschnitt 59 mit der Entspannungskammer 54 in Verbindung. Dabei mündet der zweite Zulaufkanalabschnitt 59 mit einem Auslaufstutzen 60 aus, der sich durch die Entspannungskammer 54 hindurch bis dicht an das Abschlussieb 55 erstreckt und gegen den vollen Mittelbereich 56 des Abschlusiebes 55 gerichtet ist.

Das Gehäuse des elektromagnetisch gesteuerten Dreiwegeventils 58 liegt dichtend gegen eine passende Aussenfläche 61 des Filterpfannenträgers 5 an und ist z.B. an diesem ange= flanscht. Die beiden Zulaufkanalabschnitte 57, 59 münden auf dieser Aussenfläche 61 des Filterpfannenträgers 5 aus und stehen dabei mit je einem Anschluss des Dreiwegeventils 58 in Verbindung. Der dritte Anschluss des Dreiwegeventils 58 steht über ein nach unten gegen den Auflagetisch 3 ge= richtetes Entlüftungsrohr 62 mit der Aussenluft in Verbin= dung. Die Ausmündung des ersten Zulaufkanalabschnitts 57 auf der Aussenfläche 61 des Filterpfannenträgers 5 ist mit einer eingeschraubten Drosseldüse 63 versehen, die nach dem Ausbau des Dreiwegeventils 58 frei zugänglich wird und leicht ausgewechselt bzw. gereinigt werden kann.

Das elektromagnetisch betätigte Dreiwegeventil 58 schliesst in seiner Ruhestellung den ersten Zulaufkanalabschnitt 57 ab und verbindet den zweiten Zulaufkanalabschnitt 59 mit dem Entlüftungsrohr 62. Dadurch wird die Verbindung der Kaffeefiltervorrichtung 4 mit dem Durchlauferhitzer 35 unterbrochen und die Filterpfanne 6 über die Entspannungs= kammer 54 mit der Aussenluft verbunden. Für die Kaffeezube= reitung wird die abgenommene Filterpfanne 6 in an sich be= kannter Weise mit Kaffeepulver gefüllt und erneut mit Hilfe des Bajonettverschlusses am Filterpfannenträger 5 befestigt. Durch Betätigung eines elektrischen Schalters 64 wird einer= seits die Aufgusswasserpumpe 34 in Gang gesetzt und an= dererseits das elektromagnetisch gesteuerte Dreiwegeventil 58 in eine Kaffeezubereitungsstellung gebracht, in der die Verbindung mit der Aussenluft über das Entlüftungsrohr 62 unterbrochen wird und die beiden Zulaufkanalabschnitte 57 und 59 untereinander verbunden werden. Das von der Speisepumpe 34 durch den Durchlauferhitzer 35 gedrückte Aufgusswasser ergiesst sich über den Verbindungsstutzen 45, die
Anschlussbohrung 46, die beiden Zulaufkanalabschnitte 57,
59 und das Auslaufrohr 60 in die Entspannungskammer 54 zunächst in Form eines starken, gegen den vollen Mittelbereich 56 des Abschlussiebes 55 gerichteten Strahls. Dieser
Aufgusswasserstrahl wird nach allen Seiten etwa parallel
zum Abschlussieb 55 abgeleitet und reinigt dadurch dieses
Sieb 55 vom Kaffeepulver, das aus der Filterpfanne 6 nach
oben durch das Abschlussieb 6 durchtritt und sich auf dessen
Oberseite absetzt.

Anschliessend füllt das eingepumpte Aufgusswasser die Entspannungskammer 54 aus, wobei der Wasserdruck in der Entspannungskammer kurzzeitig, z.B. für etwa 3 bis 6 sec
absinkt. Während dieser Füllzeit der Entspannungskammer 54
sickert das entspannte, d.h. praktisch drucklose Aufgusswasser durch das Abschlussieb 55 in die darunterliegende
Filterpfanne 6 und benetzt das darin enthaltene Kaffeepulver. Erst nach der Füllung der Entspannungskammer 54 wird
das Aufgusswasser mit dem vollen Förderdruck der Pumpe 34
durch das benetzte Kaffeepulver gedrückt. Infolge der drucklosen Vorbenetzung des Kaffeepulvers wird dabei ein besonders guter und vollständiger Auszug der Aromastoffe erzielt.
Das dadurch zubereitete Espressokaffee fliesst durch die
Ausflusstülle 7 der Filterpfanne 6 in die darunter auf dem
Auflagetisch 3 liegende Tasse. Nachdem diese Tasse in dem
gewünschten Mass gefüllt ist, wird der Schalter 64 geöffnet,
wodurch einerseits die Ausgusswasserpumpe 34 abgeschaltet und andererseits das elektromagnetisch gesteuerte Dreiwege= ventil 58 in seine Ruhestellung zurückgeführt wird, in der der erste Zulaufkanalabschnitt 57 abgeschlossen und der zweite Zulaufkanalabschnitt 59 über das Entlüftungsrohr 62 mit der Aussenluft verbunden wird.

Das elektrische und hydraulische Schaltschema der Kaffee= filtervorrichtung nach Fig. 5 in Verbindung mit einem Durch= lauferhitzer nach Fig. 2 ist in Fig. 9 dargestellt. Dabei muss noch erwähnt werden, dass der Heisswasserkessel 9 mit einem Wasserstandswächter 65 versehen ist, der die Inbe= triebnahme der Espressokaffeemaschine erst dann zulässt, wenn der Wasserstand im Heisswasserkessel 9 einen vorbe= stimmten Mindestwert nicht unterschreitet. In einer bevor= zugten, in Fig. 8 dargestellten Ausführungsform besteht der Wasserstandswächter 65 aus einem einstückigen Körper 66 aus vorzugsweise durchsichtigem Kunststoff, insbesondere Plexi= glas, in dem eine vertikale Sackbohrung 67 und zwei seit= liche, waagerechte, im Abstand übereinander angeordnete, in die vertikale Sackbohrung 67 einmündende Anschlussbohrungen 68, 69 vorgesehen sind. Die untere, seitliche Anschlussboh= rung 68 wird mit dem wassergefüllten Teil des Heisswasser= kessels 9 verbunden. Die obere seitliche Anschlussbohrung 69 steht mit dem oberen dampfgefüllten Teil des Heisswasser= kessels 9 in Verbindung. Die vertikale Sackbohrung 67 ist oben durch einen Pfropfen 70 verschlossen, der eine nach unten bis zu einer bestimmten Höhe in die vertikale Sack= bohrung 67 abgesenkte Elektrode trägt. Der in Fig. 8 dar= gestellte Wasserstandswächter 65 stellt einen Schalter dar, der den Stromkreis über den Metallkörper (Masse) des Heisswasserkessels 9 und das in diesem enthaltene Wasser schliesst, wenn der Wasserstand die Elektrode 71 erreicht, dagegen den Stromkreis öffnet, wenn der Wasserstand unter die Elektrode 71 absinkt.

Die elektrische Ausrüstung der Espressokaffeemaschine weist ein Relais 72 auf, dessen Wicklung 73 von einem Transformator 74 gespeist wird. Der Stromkreis der Relaiswicklung 73 wird über den Wasserstandswächter 65 geschlossen. Bei der Inbetriebnahme der Espressokaffeemaschine wird der Hauptschalter 75 geschlossen. Wenn der Wasserstand im Heisswasserkessel 9 niedriger als vorgeschrieben ist, d.h. die Elektrode 71 des Wasserstandswächters 65 nicht erreicht, ist der Stromkreis der Wicklung 73 unterbrochen und das Relais 72 bleibt in seiner in Fig. 9 dargestellten Ruhestellung, in der die Pumpe 34 über ein zugordnetes Kontaktpaar eingeschaltet wird. Gleichzeitig wird über ein anderes Kontaktpaar des Relais 72 das Wassernachfüllventil 43 geöffnet. Dadurch wird der Durchlauferhitzer 35, d.h. in dem dargestellten Fall der Auslauf 39 des geraden endseitigen Rohrabschnitts 38 des Wendelrohrs 36 über das Ventil 43 und das Anschlussrohr 41 mit dem Heisswasserkessel 9 verbunden. Das von der Pumpe 34 durch den Durchlauferhitzer 35 geförderte Wasser strömt in den Heisswasserkessel 9 ein. Wenn das Wasser im Heisswasserkessel 9 den vorgeschriebenen Stand d.h. die Elektrode 71 im Wasserstandswächter 65 erreicht, wird der Stromkreis der Relaiswicklung 73 über den Wasserstandswächter 65 geschlossen. Das Relais 72 zieht an und öffnet die der Pumpe 34 und dem Wassernachfüllventil 40 zugeordneten Kontaktpaare. Dadurch wird die Pumpe 34 abge= schaltet und das Wassernachfüllventil 40 geschlossen. Der Vorgang wiederholt sich selbsttätig auch im Betrieb der Espressokaffeemaschine, jedesmal wenn der Wasserstand im Heisswasserkessel 9 unter das vorbestimmte Mindestniveau absinkt.

Bei angezogenem Relais 72 wird über ein drittes Kontaktpaar und über einen auf den Dampfdruck im Heisswasserkessel 9 ansprechenden, normalerweise geschlossenen Sicherheits= schalter 76 der Stromkreis des elektrischen Heizwiderstan= des 49 im Heisswasserkessel 9 geschlossen. Die den einzelnen Kaffeefiltervorrichtungen 4 zugeordneten Betätigungsschalter 54 sind als parallelgeschaltete Doppelschalter mit einem Kontaktpaar für den Stromkreis der Pumpe 34 und einem Kon= taktpaar für die elektromagnetische Betätigung je eines Dreiwegeventils 58 ausgebildet.

Bei der in Fig. 6 und 10 dargestellten Ausführungsform der Kaffeefiltervorrichtung 4 ist auf der Unterseite des Filter= pfannenträgers 5 mittig über der Filterpfanne 6 eine an sich bekannte Verteilerdüse 77 für das Aufgusswasser angeordnet, die von einem Sieb 78 abgedeckt und über einen im Filter= pfannenträger 5 vorgesehenen Auslaufkanal 79 mit einem etwa vertikalen, über dem Filterpfannenträger 5 angeordneten Messzylinder 80 verbunden ist. Mit Hilfe dieses Messzylin= ders 80 kann die bei der Kaffeezubereitung durch das Kaffee= pulver in der Filterpfanne 6 gedrückte Aufgusswassermenge im Voraus festgelegt werden.

In dem Messzylinder 80 ist ein Ausdrückkolben 81 axial ver= schiebbar gelagert, der in seiner Mitte ein Durchlassventil aufweist. In dem dargestellten Ausführungsbeispiel besteht dieses Durchlassventil aus einer Durchtrittsöffnung 83 im Ausdrückkolben 81 und einem die Durchtrittsöffnung 83 von oben abschliessenden an einer Ventilstange 84 befestigten Ventilteller 82, der als Mitnehmer für den Ausdrückkolben 81 dient und dazu von einem perforierten Kolbendeckel 85 übergriffen wird, der im Abstand über dem in Schliess= stellung abgesenkten Ventilteller 82 am Ausdrückkolben 81 befestigt ist. Die Ventilstange 84 ist verschiebbar durch den Kolbendeckel 85 und durch den oberen Abschlussdeckel 86 des Messzylinders 80 durchgeführt. Zwischen dem Zylinder= deckel 86 und einer auf der Ventilstange 84 befestigten Federstütze 87 ist eine Schliessfeder 88 eingespannt, die die Ventilstange 84 nach unten und den Ventilteller 82 in Schliesstellung der Durchtrittsöffnung 82 gegen den zuge= ordneten Ventilsitz im Ausdrückkolben 81 drückt. In einem auf dem Abschlussdeckel 86 des Messzylinders 80 befestigten Lagerbock 89 ist ein Handhebel 90 schwenkbar gelagert. Ein an dem äusseren Ende der Ventilstange 84 befestigter Mit= nehmerstift 92 steht mit dem gabelförmig ausgebildeten freien Ende 91 des Handhebels 90 im Eingriff. Ein finger= förmiger Endansatz 93 des Handhebels 90 wirkt mit dem Betä= tigungshebel eines elektrischen Schalters 94 zusammen. Wie insbesondere aus dem Schaltbild nach Fig. 10 hervorgeht, liegen die den einzelnen Kaffeefiltervorrichtungen 4 bzw. Messzylindern 60 der Espressokaffeemaschine zugeordneten Schalter 94 parallel zueinander im Stromkreis der Aufguss= wasserpumpe 34. Der Messzylinder 80 ist in seinem oberen Teil über ein Rohr 95 und einen im Filterpfannenträger 5 vorgesehenen Zulaufkanal 96 mit der Anschlussbohrung 46 für den Verbindungsstutzen 45 zum Durchlauferhitzer 35 verbun= den. Die Höhenlage des Ausdrückkolbens 81 im Messzylinder 80 kann gefühlsmässig von der Winkelstellung des Handhebels 90 abgeleitet oder auf einer beliebigen, nicht dargestellten Anzeigevorrichtung abgelesen werden. Zu diesem Zweck ist es auch möglich, den Mantel des Messzylinders 80 zumindest teilweise durchsichtig auszubilden.

In der Ruhestellung der Kaffeefiltervorrichtung 4 nach Fig. 6, ist der Ausdrückkolben 81 vollständig abgesenkt und liegt auf dem Boden des Messzylinders 80. Das Durchlassventil im Ausdrückkolben 81 ist geschlossen, d.h. der Ventilteller 82 ist durch die Schliessfeder 88 nach unten gegen den zuge= ordneten Ventilsitz gedrückt. Die Feder 88 hält über die Ventilstange 84 auch den Handhebel 90 in einer Ausgangs= stellung, in der das Griffende dieses Hebels 90 nach oben geschwenkt ist. Der fingerförmige Ansatz 93 des abgeschwenk= ten gabelförmigen Hebelendes 91 hält den Schalter 94 in Offenstellung, wie insbesondere auch in Fig. 10 dargestellt ist. Der ganze Raum des Messzylinders 80 über dem abgesenk= ten Ausdrückkolben 81 ist mit heissem Aufgusswasser gefüllt, das im Zuge der vorhergehenden Kaffeezubereitung von der Speisepumpe 34 durch den Durchlauferhitzer 35 über den Ver= bindungsstutzen 45, die Anschlussbohrung 46, den Zulaufkanal 96 und das Rohr 95 mit einer Temperatur von höchstens 100°C, im allgemeinen von weniger als 100°C eingepumpt wurde. Diese Heisswasserfüllung des Messzylinders 80 wird durch direkte Wärmeübertragung vom Heisswasserkessel 9 auf die angestrebte Temperatur, z.B. von etwa 90°C gehalten. Zu diesem Zweck

... liegt der Filterpfannenträger 5 und/oder der Messzylinder 80 mit einer möglichst grossen Wärmeübertragungsfläche gegen den Mantel des Heisswasserkessels 9 an. Diese direkte grossflächige, wärmeübertragende Berührung zwischen dem Heisswasserkessel 9 und dem Filterpfannenträger 5, die übrigens auch bei der Ausführungsform nach Fig. 5 gegeben ist, wird dadurch ermöglicht, dass der Heisswasserkessel 9 unmittelbar über den Kaffeefiltervorrichtungen 4 angeordnet ist.

Für die Kaffeezubereitung mit der Kaffeefiltervorrichtung nach Fig. 6 und 10, wird der Handhebel 90 mit seinem Griffende nach unten geschwenkt. Dadurch wird zunächst über die Ventilstange 84 der Ventilteller 82 vom zugeordneten Ventilsitz angehoben, d.h. das Durchlassventil im Ausdrückkolben 81 geöffnet. Anschliessend wird im selben Zug der Ausdrückkolben 81 über den als Mitnehmer mit dem Kolbendeckel 85 zusammenwirkenden Ventilteller 82 so weit angehoben, bis der Raum unter dem Ausdrückkolben 81 im Messzylinder 80 der für die Kaffeezubereitung gewünschten Aufgusswassermenge entspricht. Während dieser Hubbewegung des Ausdrückkolbens 81 verlagert sich ein entsprechender Teil des Aufgusswassers von dem oberhalb des Ausdrückkolbens 81 liegenden Messzylinderraum über das geöffnete Durchlassventil in den unterhalb des Ausdrückkolbens 81 liegenden Messzylinderraum. Durch die Schwenkbewegung des Handhebels 90 wird auch der Schalter 94 freigegeben und infolgedessen geschlossen. Dadurch wird die Speisepumpe 34 eingeschaltet, die Aufgusswasser durch den Durchlauferhitzer 35 in den oberen Teil des Messzylinders 80 drückt. Der Handhebel 90 wird sofort nach dem Abschwenken seines Griffendes losgelassen. Dabei drückt die Schliessfeder 88 den Ventilteller 82 nach unten in seine Schliesstellung, d.h. die Durchtrittsöffnung 83 im Ausdrückkolben 81 wird geschlossen. Der im oberen Teil des Messzylinders 80 von der Pumpe 34 aufgebaute Druck verschiebt infolgedessen den Ausdrückkolben 81 nach unten. Dieser Kolben 81 drückt dabei die darunterliegende vorher bei der Hubbewegung des Kolbens 81 durch diesen durchgelassene und dadurch abgemessene Aufgusswassermenge über den Auslaufkanal 79 und die Verteilerdüse 77 durch die Kaffeepulverfüllung der Filterpfanne 6. Kurz bevor der Ausdrückkolben 81 seine unterste Ausgangsstellung erreicht, verstellt der fingerförmige Endansatz 93 des Handhebels 90 den Betätigungshebel des Schalters 94 in Offenstellung und schaltet dadurch die Aufgusswasserpumpe 34 ab.

0011290

Patentansprüche

1. Espressokaffeemaschine mit einem geschlossenen Heisswasserkessel, mindestens einer mit dem oberen dampfgefüllten Teil dieses Heisswasserkessels wahlweise verbindbaren
Dampfabzapftülle, einem im wassergefüllten Teil des Heisswasserkessels angeordneten, mit einer Speisepumpe verbundenen Durchlauferhitzer für das Aufgusswasser zur Kaffeezubereitung und mindestens einer wahlweise mit dem Durchlauferhitzer verbindbaren Kaffeefiltervorrichtung, dadurch gekennzeichnet, dass der Heisswasserkessel (9) unmittelbar
über der Kaffeefiltervorrichtung (4) angeordnet und diese
mit einem im unteren Bereich des Heisswasserkessels (9)
liegenden Abschnitt (38, 52) des Durchlauferhitzers (35)
verbunden ist.

2. Espressokaffeemaschine nach Anspruch 1, dadurch gekennzeichnet, dass die Speisepumpe (34) für das Aufgusswasser
und ein allfälliger Aufgusswasserenthärter (33) im Gehäuse
der Espressokaffeemaschine untergebracht sind.

3. Espressokaffeemaschine nach Anspruch 1 oder 2, dadurch
gekennzeichnet, dass die Kaffeefiltervorrichtung (4) mit
einer Anschlussbohrung (46) dichtend auf einen unterseitig
vom Heisswasserkessel (9) vorspringenden, mit dem Durchlauferhitzer (35) verbundenen Wasserabzapfstutzen (45) gesteckt
ist.

4. Espressokaffeemaschine nach einem der Ansprüche 1 bis 3,
dadurch gekennzeichnet, dass die Kaffeefiltervorrichtung

mit einer Wärmeübertragungsfläche gegen den Heisswasserkessel (9) anliegt.

5. Espressokaffeemaschine nach einem der Ansprüche 1 bis 4, dadurch gekennzeichnet, dass der Durchlauferhitzer aus einem waagerechten Wendelrohr (36) besteht, dessen Einlaufende (37) mit der Speisepumpe (34) für das Aufgusswasser und dessen Auslaufende mit einem im·unteren Bereich des vom Wendelrohr (36) umgebenen Raums oder im unteren Bereich des Heisswasserkessels in Richtung auf das Einlaufende (37) zu= rückgeführten, an die Kaffeefiltervorrichtung (4) ange= schlossenen Rohrabschnitt (38) verbunden ist.

6. Espressokaffeemaschine nach Anspruch 5, dadurch gekenn= zeichnet, dass im Inneren des vom Wendelrohr (36) des Durch= lauferhitzers (35) umgebenen Raums mindestens ein elektri= scher Heizwiderstand (49) für den Heisswasserkessel (9) angeordnet ist.

7. Espressokaffeemaschine nach Anspruch 5, dadurch gekenn= zeichnet, dass bei mehreren, an den Durchlauferhitzer (35) angeschlossenen Kaffeefiltervorrichtungen (4) mehrere, je einer Kaffeefiltervorrichtung (4) zugeordnete, in Parallel= schaltung über einen gemeinsamen Einlauf (37) mit der Spei= sepumpe (34) für das Aufgusswasser verbundene Wendelrohre (36) als Durchlauferhitzer (35) im Heisswasserkessel (9) vorgesehen sind.

8. Espressokaffeemaschine nach einem der Ansprüche 1 bis 4, dadurch gekennzeichnet, dass der Durchlauferhitzer (35) aus einem waagerechten, beiderends geschlossenen Zylinder (52) besteht, der im unteren Bereich des Heisswasserkessels (9) angeordnet und vorzugsweise über eine durch den darüberlie= genden Bereich des Heisswasserkessels (9) durchgeführte Vorwärmeleitung (53) mit der Speisepumpe (34) für das Auf= gusswasser verbunden ist.

9. Espressokaffeemaschine nach Anspruch 8, dadurch gekenn= zeichnet, dass über dem Zylinder (52) und der Vorwärmelei= tung (53) mindestens ein elektrischer Heizwiderstand (49) für den Heisswasserkessel (9) angeordnet ist.

10. Espressokaffeemaschine nach einem der Ansprüche 1 bis 9, dadurch gekennzeichnet, dass der Durchlauferhitzer (35) mit dem Heisswasserkessel (9) über ein elektromagnetisch betä= tigbares Wassernachfüllventil (40) verbunden ist, das durch einen auf den Wasserstand im Heisswasserkessel (9) an= sprechenden elektrischen Wasserstandswächter (65) gesteuert ist.

11. Espressokaffeemaschine nach Anspruch 10, dadurch gekenn= zeichnet, dass der Wasserstandswächter (65) aus einem ein= stückigen Körper (66) aus elektrisch isolierendem Material, insbesondere Kunststoff besteht, und dass in diesem Körper eine vertikale Sackbohrung (67) vorgesehen ist, die eine von oben bis zum Sollwasserstand reichende Elektrode (71) enthält und über eine untere waagerechte Bohrung (68) mit dem wassergefüllten Teil des Heisswasserkessels (9) und über eine obere waagerechte Bohrung (69) mit dem dampfge= füllten Teil des Heisswasserkessels (9) verbunden ist.

12. Espressokaffeemaschine nach einem der Ansprüche 1 bis 11, dadurch gekennzeichnet, dass eine Wasserabzapftülle (44) wahlweise über ein handbetätigtes Wasserabzapfventil (43) abwechselnd mit dem Heisswasserkessel (9) und dem Durchlauferhitzer (35) verbindbar ist.

13. Espressokaffeemaschine nach einem der Ansprüche 1 bis 12, dadurch gekennzeichnet, dass zwei Dampfabzapftüllen (13) vorgesehen sind, die wahlweise abwechselnd über ein handbetätigtes Dampfabzapfventil (12) mit dem dampfge= füllten Teil des Heisswasserkessels (9) verbindbar sind.

14. Espressokaffeemaschine nach Anspruch 12 oder 13, da= durch gekennzeichnet, dass das Wasser- und/oder Dampfabzapf= ventil (43 bzw. 12) als Dreiwegehahn mit kegelförmigem, in einem Abdichtkörper (16) aus Kunststoff, insbesondere aus Polytetrafluoräthylen drehbar gelagertem, in Richtung auf sein schmaleres Ende federnd belastetem Verschlusskörper (17) ausgebildet ist.

15. Espressokaffeemaschine nach einem der Ansprüche 1 bis 14, dadurch gekennzeichnet, dass die Kaffeefiltervorrichtung (4) über ein elektromagnetisch betätigtes Dreiwegeventil (58) abwechselnd mit dem Durchlauferhitzer (35) und über ein Entlüftungsrohr (62) mit der Atmosphäre verbinbar ist.

16. Espressokaffeemaschine nach Anspruch 15, dadurch ge= kennzeichnet, dass über der lösbar befestigten, zur Aufnahme des Kaffeepulvers bestimmten Filterpfanne (6) der Kaffee= filtervorrichtung (4) im zugeordneten ortsfesten Filter= pfannenträger (5) eine einerseits mit dem Zulaufkanal (59) für das Aufgusswasser und andererseits mit der Filterpfanne (6) verbundene Entspannungskammer (54) vorgesehen ist.

17. Espressokaffeemaschine nach Anspruch 16, dadurch ge= kennzeichnet, dass die Entspannungskammer (54) auf ihrer Unterseite von einem Abschlussieb (55) mit vollwandigem Mittelbereich (56) begrenzt ist und der Zulaufkanal (59) für das Aufgusswasser mit einem Auslaufstutzen (60) ab= schliesst, der sich durch die Entspannungskammer (54) hin= durch bis dicht an das Abschlussieb (55) erstreckt und gegen dessen vollwandigen Mittelbereich (56) gerichtet ist.

18. Espressokaffeemaschine nach einem der Ansprüche 1 bis 14, dadurch gekennzeichnet, dass die Kaffeefiltervorrichtung (4) einen Messzylinder (80) aufweist, der an einem Ende mit der lösbar befestigten, zur Aufnahme des Kaffeepulvers be= stimmten Filterpfanne (6) und an seinem entgegengesetzten Ende mit dem Durchlauferhitzer (35) verbunden ist und einen Ausdrückkolben (81) mit mindestens einem Durchlassventil (82, 83) aufweist, wobei Mittel zum Verstellen des Ausdrück= kolbens in Richtung auf das mit dem Durchlauferhitzer (35) verbundene Ende des Messzylinders (80) bei gleichzeitiger vorübergehender Öffnung des Durchlassventils (82, 83) und zeitweisem Einschalten der Speisepumpe (34) für das Aufguss= wasser vorgesehen sind.

19. Espressokaffeemaschine nach Anspruch 18, dadurch ge= kennzeichnet, dass der Ventilteller (82) des Durchlassven= tils im Ausdrückkolben (81) in Richtung auf das mit dem

0011290

Durchlauferhitzer (35) verbundene Ende des Messzylinders (80) entgegen der Kraft einer Schliessfeder (88) öffnet und über eine Ventilstange (84) mit einem Handhebel (90) verbunden ist, der mit einem Schalter (94) zur Steuerung der Speisepumpe (34) für das Aufgusswasser in Wirkverbindung steht, wobei der Ventilteller (82) des Durchlassventils gleichzeitig auch als Mitnehmer für den Ausdrückkolben (81) ausbebildet ist.

0011290

Fig.1

Fig.2

Fig.3

0011290

Fig.4

Fig.5

0011290

Fig.7

Fig.6

Fig.9

Fig.10

Fig.8

7/4

0011290

## EINSCHLÄGIGE DOKUMENTE

| Kategorie | Kennzeichnung des Dokuments mit Angabe, soweit erforderlich, der maßgeblichen Teile | betrifft Anspruch |
|-----------|-----------------------------------------------------------------------|-------------------|
| | FR - A - 1 216 787 (LACCARINI)<br>* Insgesamt * | 1,4,5 |
| | -- | |
| | US - A - 3 824 914 (CASIANO)<br>* Insgesamt * | 1,2,4,<br>12,13 |
| | -- | |
| | FR - A - 1 410 805 (CIMBALI)<br>* Figur 1 * | 1,3,4 |
| | -- | |
| | US - A - 3 599 557 (LEAL)<br>* Figur 1 * | 1 |
| | -- | |
| | DE - B - 1 297 294 (OMRE S.A.S.)<br>* Figur 1 * | 1,8,9 |
| | -- | |
| | DE - B - 1 243 359 (HAINDL)<br>* Insgesamt * | 1,5,<br>12,13 |
| | -- | |
| | FR - A - 1 170 661 (GIMENO ALEPUZ)<br>* Figuren * | 1,4,5 |
| | -- | |
| | CH - A - 591 837 (MEYER)<br>* Spalte 2, Zeilen 25-39 * | 2 |
| | -- | |
| | ./. | |

**KLASSIFIKATION DER ANMELDUNG (Int.Cl. 3)**

A 47 J 31/24
          31/54

**RECHERCHIERTE SACHGEBIETE (Int.Cl.)**

A 47 J

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---------------|----------------------------|--------|
| Den Haag | 27-02-1980 | SCHARTZ |

EPA form 1503.1   06.78

| Kategorie | Kennzeichnung des Dokuments mit Angabe, soweit erforderlich, der maßgeblichen Teile | betrifft Anspruch |
|---|---|---|
| | **EINSCHLÄGIGE DOKUMENTE** | |
| | DE - B - 1 297 293 (WURTTEM-BERGISCHE)<br><br>× Spalte 3, Zeilen 37-50; Figur 1 ×<br><br>-- | 11 |
| | FR - A - 2 220 218 (E. BIANCHI S.P.A.)<br><br>× Insgesamt ×<br><br>-- | 4,15,19 |
| | CH - A - 325 796 (KISAG A.G.)<br><br>× Insgesamt ×<br><br>-- | 16,17 |
| | FR - A - 1 570 239 (SO.MA.CA.)<br><br>× Insgesamt ×<br><br>---- | 18 |

KLASSIFIKATION DER
ANMELDUNG (Int. Cl.³)

RECHERCHIERTE
SACHGEBIETE (Int. Cl.³)